(19) Europäisches Patentamt
European Patent Office
Office européen des brevets

(11) Publication number: 0 192 130 B1

# (12) EUROPEAN PATENT SPECIFICATION

(45) Date of publication of patent specification: 27.06.90

(51) Int. Cl.[5]: C 23 F 11/04, C 23 G 1/06, C 23 F 11/12

(21) Application number: 86101524.6

(22) Date of filing: 06.02.86

## (54) Corrosion inhibitor composition.

(30) Priority: 11.02.85 US 700415

(43) Date of publication of application: 27.08.86 Bulletin 86/35

(45) Publication of the grant of the patent: 27.06.90 Bulletin 90/26

(84) Designated Contracting States: AT DE FR GB NL

(56) References cited:
EP-A-0 130 006
FR-A-1 298 586
US-A-3 705 106
US-A-3 773 465
US-A-3 992 313
US-A-4 028 268
US-A-4 248 796

(73) Proprietor: HENKEL CORPORATION (a Delaware corp.)
7900 West 78th Street
Minneapolis Minnesota 55435 (US)

(72) Inventor: Comar, Majda
4575 Dundee Drive
Los Angeles California 90027 (US)

(74) Representative: von Kreisler, Alek, Dipl.-Chem. et al
Deichmannhaus am Hauptbahnhof
D-5000 Köln 1 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

This invention relates to a composition for the inhibition of metal corrosion in aqueous acidic solutions, and is more particularly concerned with a corrosion inhibitor composition for use in aqueous hydrochloric acid to inhibit the corrosion of iron, steel, ferrous alloys or nickel exposed to such aqueous acid.

The present invention is also concerned with providing a new and improved corrosion inhibitor composition which may be employed in acidizing solutions and which will be effective in inhibiting metal corrosion in acid solutions at relatively high temperatures and for relatively long periods of time. The corrosion inhibitors as described herein are useful in inhibiting the corrosion of metals in contact with aqueous acids such as hydrochloric, phosphoric, hydrofluoric, citric, sulfuric acids and the like associated with various industrial operations.

The corrosive attack of metal surfaces in contact with aqueous acids is a serious problem, experienced in such treatment procedures as chemical and electrolytic pickling operations, acid dipping processes, plant wash-out procedures, high temperature cleaning of metal surfaces of industrial equipment, and oil-well acidizing operations. Inhibitors are desirable to prevent or inhibit corrosion or erosion of the metal surfaces. In the field of oil-well acidizing operations, it is necessary to use inhibitors to prevent corrosion of the oil-well equipment by the aqueous acid solutions employed. Various other industrial operations, such as chemical and electrolytic pickling operations, acid dipping processes, high temperature cleaning of metal surfaces of industrial equipment, and plant wash-out procedures, also involve contact between an aqueous acidic solution and a metal, and an inhibitor must be used in order to minimize corrosion and/or consumption of the metal by such contact.

In oil-well acidizing, there are needs for effective corrosion inhibitors for use at temperatures of 79.4°C (175°F) and above, such as are encountered in various operations involving acidic solutions, particularly where increasingly elevated temperatures are encountered as the well extends further and deeper into the earth. Such deeper exploration wells have more corrosive environments and involve higher temperatures and pressures. These conditions cause problems in the areas of tubular goods, casing connections and wellhead equipment.

While various corrosion inhibiting agents have been proposed, most have been employed with only varying degrees of success. Some inhibitors which have been proposed are reasonably effective at low and moderate temperatures, but fail when higher temperatures or longer periods of exposure are encountered.

Various nitrogen containing compounds, such as amines and their quaternary ammonium derivatives, have been previously used in corrosion inhibition compositions. Thus, United States Patent Nos. 2,993,864, 3,077,453, 3,107,221, 3,382,179, 3,404,094, 3,505,235, 3,632,524, 3,658,720, 3,668,137, 3,779,935, 3,802,890, 4,028,268 and 4,222,886 all show a variety of nitrogen containing compounds, as effective components in known corrosion inhibiting formulations. It is also known to use one or more acetylenic alcohols as corrosion inhibitors. For example, United States Patent Nos. 2,993,862, 2,993,863, 2,993,864, 3,077,453, 3,107,221, 3,382,179, 3,404,094, 3,505,235, 3,600,321, 3,632,524, 3,658,720, 3,779,935, 3,802,890, 4,028,268 and 4,444,668 all discuss the relative effectiveness of incorporating one or more acetylenic alcohols in compositions for inhibiting the corrosion of metals in aqueous acidic environments.

The corrosion inhibitor of the present invention is a composition comprising corrosion inhibiting amounts of a nitrogen containing compound and an acetylenic alcohol which comprises a mixture of 2-methyl-3-butyne-2-ol and 2,5-dimethyl-3-hexyne-2,5,-diol available from Lonza under the trademark CORYNOL.

The compositions may also include a surfactant and organic solvent and other acetylenic or non-acetylenic alcohols may be employed along with the CORYNOL.

The present invention accordingly is an improvement in corrosion inhibitor compositions containing a nitrogen containing compound and an acetylenic alcohol wherein a specific mixture of acetylenic alcohols is employed as at least one of the acetylenic alcohols i.e. a mixture of 2-methyl-3-butyne-2-ol, and 2,5-dimethyl-3-hexyne-2,5-diol (CORYNOL).

In its preferred aspect the nitrogen containing organic compounds are illustrated as certain Mannich bases and quaternary compounds more specifically described in the detailed description which follows.

Optionally, the composition of this invention may also contain a surfactant and a solvent. The surfactant may be any surfactant which is stable in aqueous acid. Appropriate solvents may be any organic solvent, which is acid soluble and acid stable, or water.

The invention may also be summarized as a method of inhibiting the corrosivity of corrosive acids in contact with nickel and ferrous metals, such as iron, steel and ferrous alloys, by adding to the corrosive acid an effective amount of the aforementioned composition according to this invention.

The present invention relates to a corrosion inhibiting composition for use in aqueous acidic solutions comprising a nitrogen compound and an acetylenic alcohol in a corrosion inhibiting amount, the improvement wherein said acetylenic alcohol is a mixture of (α) 2-methyl-3-butyne-2-ol and (β) 2,5-dimethyl-3-hexyne-2,5-diol in which said 2-methyl-3-butyne-2-ol comprises from 25 to 95% by weight of

the mixture and said nitrogen compound is a quaternary ammonium compound selected from compounds according to the structural formulae:

(a) $[R_5—Z—R_6]^{q+}\ qX^-$

(b) $[R_5—P]^{q+}\ qX^-$

(c) $$[R_8—\underset{R_9}{\overset{R_7}{N}}—CH_2—C{\equiv}C—CH_2—\overset{R_7}{N}—R_8]^{q+}\quad qX^-$$

(d) $[(R_{10})_3—N—(CH_2)_3—N—(R_{10})_3]^{q+}\quad qX^-$

(e) $[R_{12}—CH_2CH_2—N—(R_{10})_3]^{q+}\quad qX^-$

(f) $[(R_{10})_4—N]^{q+}\quad qX^-$

wherein:

$R_5$ and $R_6$ are the same or different aromatic or non-aromatic heterocyclic tertiary amine,

$R_7$ and $R_8$ are the same or different lower alkyl,

$R_9$ is hydroxy substituted lower alkynyl,

$R_{10}$ substituents are chosen such that no more than one is a saturated or unsaturated fatty aliphatic radical of 7—24 carbon atoms and the other $R_{10}$ substituents are lower alkynyl of benzyl,

$R_{12}$ is a non-aromatic heterocyclic tertiary amine,

Z is $—CH_2—$, $—(CH_2)_2—$, $—CH_2—C{\equiv}C—CH_2—CH{=}CH—CH_2—$,

q is a number equal to the total number of quaternary nitrogen atoms in the cationic portion of the quaternary,

X is an anion selected from the group consisting of chlorine, bromine and iodine,

P is an alpha-alkenyl or alpha-alkynyl radical of 3—10 carbon atoms or benzyl and in which the weight ratio of said acetylenic alcohol mixture to said nitrogenous compound is in the range of 1:10 to 10:1, and whereby said composition contains optionally an acetylenic alcohol other than the alcohols (α) and (β) and in which the ratio by weight of the mixture of (α) and (β) to said additional alcohol is between 1:10 to 10:1.

The heterocyclic amines and quaternary derivations are particularly preferred.

$$[R_1—CH_2—C{\equiv}C—CH_2—R_2]^{++}\ 2\ x^- \qquad (a)$$

where $R_1$ and $R_2$ is aromatic heterocyclic tertiary amine or non-aromatic heterocyclic tertiary amine, and x is an anion, preferably halogen;

$$[R_1—CH_2—C{\equiv}CR']^{+}\ 1\ x^- \qquad (b)$$

where $R_1$ is aromatic heterocyclic tertiary amine or non-aromatic heterocyclic tertiary amine, R' is a member of the group consisting of H and lower alkyl (1—6 carbon) radical, and x is an anion, preferably halogen;

$$[R_1—CH_2—CH{=}CH—CH_2—R_2]^{++}\ 2\ x^- \qquad (c)$$

where $R_1$ and $R_2$ is aromatic heterocyclic tertiary amine, or non-aromatic heterocyclic tertiary amine, and x is an anion, preferably halogen;

$$[R—CH_2CH{=}CH—CH_3]^{+}\ 1\ x^- \qquad (d)$$

where R is aromatic heterocyclic tertiary amine or non-aromatic heterocyclic tertiary amine, and x is an anion, preferably halogen;

$$[R—CH_2—C_6H_5]^{+}\ 1\ x^- \qquad (e)$$

where R is aromatic heterocyclic tertiary amine, and x is an anion, preferably halogen.

Non-limiting examples of suitable aromatic and non-aromatic heterocyclic tertiary amines satisfying $R_5$, $R_6$ and $R_{12}$ may be quinoline, pyridine, morpholine, pyrrolidine, piperazine, isoquinoline, benzoquinoline, imidazole, pyrimidine, carbazole and the like, which may optionally be further substituted by 1 to 5 nuclear alkyl, phenyl or benzyl substituents, said alkyl substituents having 1 to 12 carbon atoms per heterocyclic moiety. Preferred examples of aromatic heterocyclic tertiary amines are alkyl pyridines having 1 to 5 nuclear alkyl substituents per pyridine moiety, said alkyl substituents having 1 to 12 carbon

atoms and preferably having an average of about 6 carbon atoms per pyridine moiety, a mixture of high-boiling and low-boiling tertiary amine heterocyclic compounds, such as Alkolidine 10, Alkolidine 11, Alkolidine 12, Alkolidine 13 and Alkolidine 00, available from Lonza; a high-boiling Alkyl Pyridine (HAP) and polyalkylated Pyridine PAP—200 and PAP—220, available from Reilly Tar and Chemical Corp.; Pyridine Bases 150 and 400 and mixed Alkyl Pyridines such as Pyridine Residue Whole, available from Nepera; and/or Alkyl Pyridine Residue BHR, AHM and AHR, available from E. T. Horn.

Specific examples of preferred quaternary ammonium compounds which may be used in formulating the corrosion inhibitor of the present invention include:

(A) Quinoline-N-benzyl-ammonium chloride

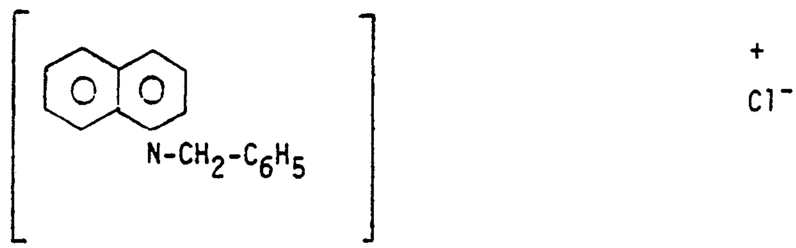

(B) Bis(butyne-2-yl)-1,4-quinolinium dichloride

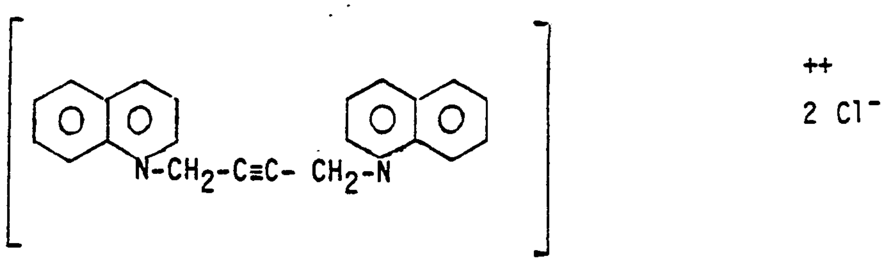

(C) Bis(butyne-2-yl)-1,4-alkylpyridinium dichloride

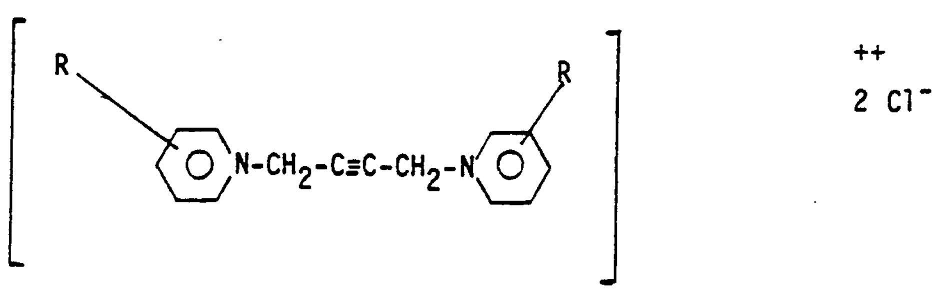

(D) 1-benzyl-2,3-diphenyl-5-morpholinoethyl-pyrrolidine-N,N'-dibenzyldiammonium chloride

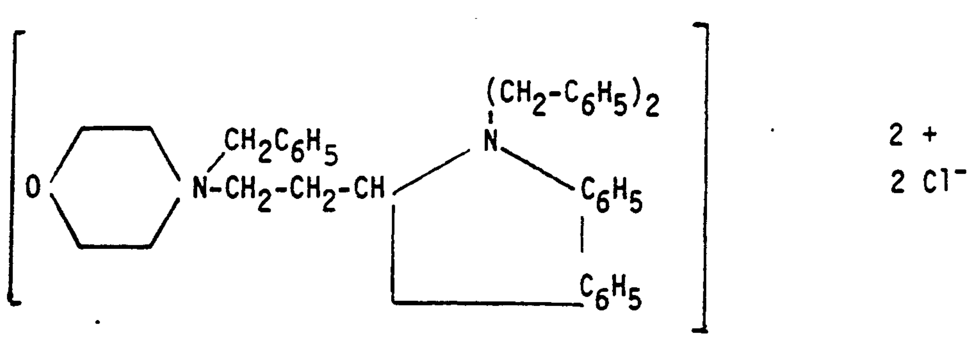

(E) Bis(butyne-2-yl)-1-diethylamino-4-oxy-2-heptyn-ammonium chloride

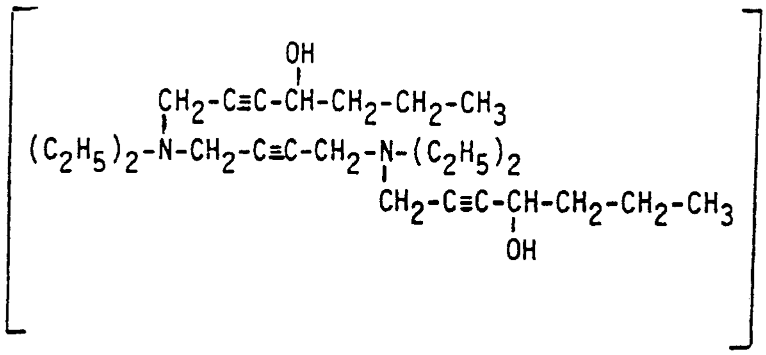

$2+$
$2\ Cl^-$

(F) 1-benzyl-2,3-diphenyl-5-dibenzylpiperazinomethylpyrrolidine-N,N' dibenzyltriammonium chloride

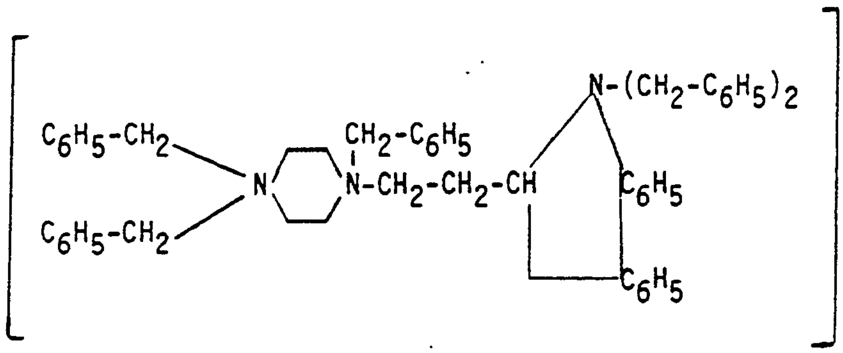

$3+$
$3\ Cl^-$

(G) N-tallow-N-dipropargyl-N'-tripropargyl-propyladiammoniumchloride

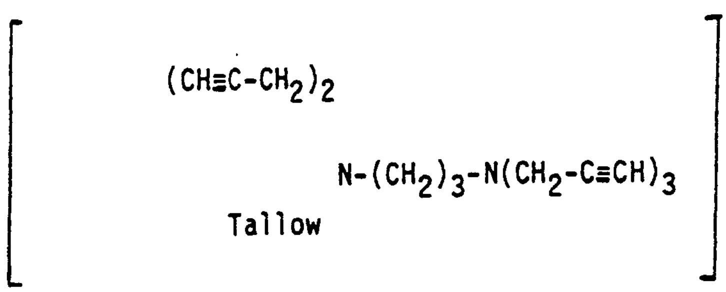

$2+$
$2\ Cl^-$

(H) 1-benzyl-2,3-diphenyl-5-benzyl-tallow-aminoethylpyrrolidine-N,N' -dibenzyldiammonium chloride

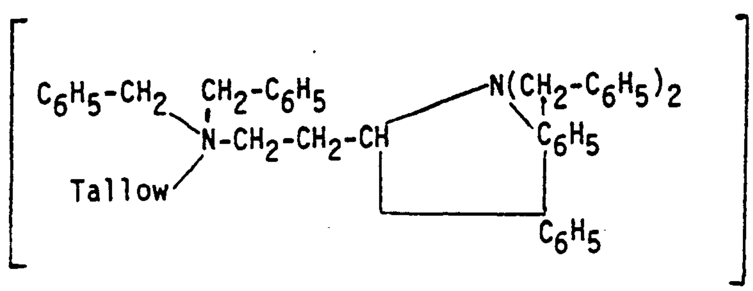

$2+$
$2\ Cl^-$

(I) N-dibenzyl-N-tribenzylethylpiperazinium dichloride

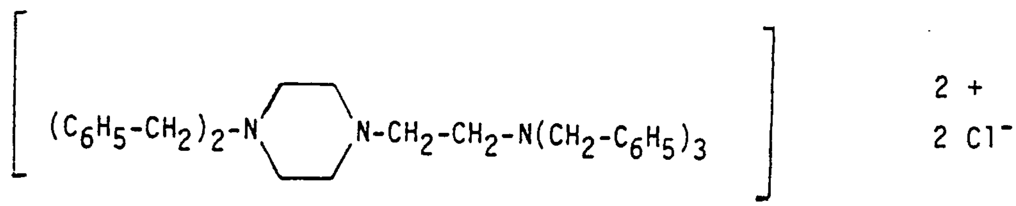

(J) N-tallow-N-dibenzyl-N'-tribenzylpropyldiammonium chloride

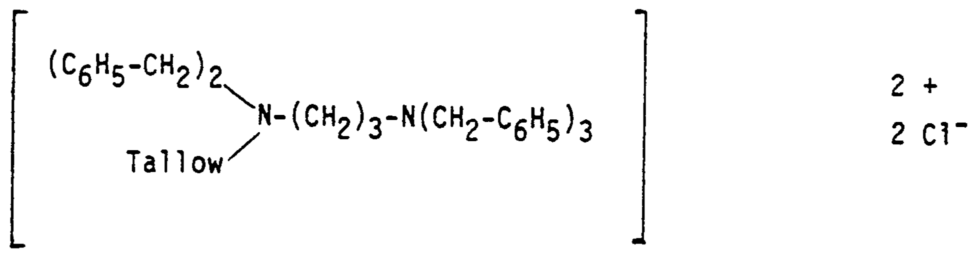

(K) Tri-propargylbenzylammonium chloride

$$\left[ C_6H_5-CH_2-N(CH_2-C\equiv CH)_3 \right]^{+} Cl^{-}$$

(L) N,N,N-benzylpropargyltallow-N,N-dipropargylbenzyl-propyldiammonium chloride

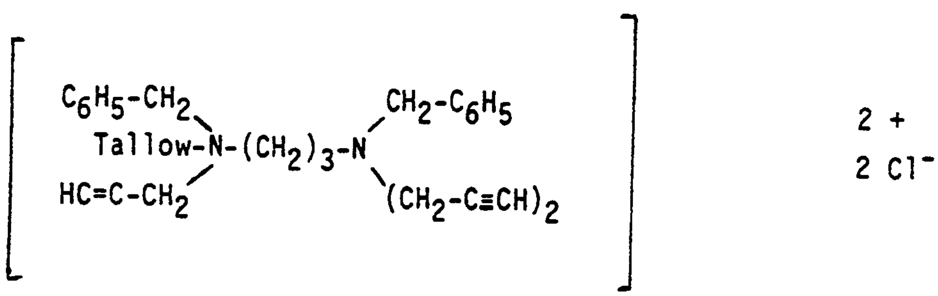

isoquinoline-N-benzyl chloride quaternary, thioalkyl pyridine quaternaries, thioquinoline quaternaries, thiobenzoquinoline quaternaries, imidazole quaternaries, pyrimidine quaternaries, carbazole quaternaries, alkyl pyridine-N-methyl chloride quaternary and alkyl pyridine-N-benzyl chloride quaternaries of the pyridine materials of Lonza, E. T. Horn, Nepera and Reilly Tar and Chemical described earlier.

The acetylenic alcohol employed in the corrosion inhibitor of this invention, at least one must be acetylenic alcohol containing, consists essentially of a mixture 2-methyl-3-butyne-2-ol, 2,5-dimethyl-3-hexyne-2,5-diol acetic acid, potassium acetate, water and acetone aldolization products, such as diacetone alcohol, mesityl oxide and phorone. Such acetylenic alcohols are available from Lonza, under the

trademark CORYNOL. A typical composition of CORYNOL RPA as commercially available in water consists of:

| | |
|---|---|
| 2-methyl-3-butyne-2-ol | 12—19% w/w |
| 2,5-dimethyl-3-hexyne-2,5-diol | 30—34% w/w |
| acetic acid | 2— 4% w/w |
| potassium acetate | 3— 5% w/w |
| water | 19—24% w/w |

The balance of impurities is composed of acetone aldolization products such as diacetone alcohol, mesityl oxide and phorone.

The composition of the other CORYNOL products is given as:
CORYNOL RPA—1 4 parts methyl butynol/1 part CORYNOL RPA
CORYNOL RPA—2 6 parts methyl butynol/1 part CORYNOL RPA
CORYNOL RPA—3 8 parts methyl butynol/1 part CORYNOL RPA
based on the total amount of the methyl butynol and 2,5-dimethyl-3-hexyne-2,5-diol, the methyl butynol will thus comprise from about 25—95% of the mixture.

The other acetylenic alcohols employed in the present invention suitably include compounds of the general structural formula:

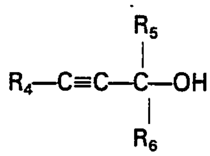

wherein $R_4$, $R_5$ and $R_6$ may be the same or different and are independently selected from the group consisting of hydrogen, alkyl, preferably of up to 7 carbon atoms, phenyl, alkyl substituted phenyl, preferably having up to 10 carbon atoms in the alkyl portion thereof, hydroxy-alkyl, preferably of up to 7 carbon atoms, or the alpha-R's may be joined together to form a 5 or 6 membered alicyclic ring. Such acetylenic alcohols include hexynol, dimethyl hexynol, dimethyl hexynediol, dimethyl octynediol, methyl butynol, methyl pentynol, ethynyl cyclohexanol, phenyl butynol, ditertiary acetylenic glycol, ethyl octynol, 3,4-dihydroxy-1-butyne, 1-ethynylcyclohexanol, 2-methyl-3-butyn-2-ol, 1-propyn-3-ol, 1-butyn-3-ol, 1-pentyn-3-ol, 1-heptyn-3-ol, 1-octyn-3-ol, 1-nonyn-3-ol, 1-decyn-3-ol, 3-(2,4,5-trimethyl-3-cyclohexenyl)-1-propyne-3-ol, propargyl alcohol, 1,4-butynediol, 3-methyl-1-nonyl-3-ol, alpha-ethynyl-2,4,6-trimethylbenzyl alcohol, 2-methyl-1-pentyn-3-ol, alpha-ethynyl-benzyl alcohol, 1-(2,4,6-trimethyl-3-cyclohexenyl)-3-propyne-1-ol, benzyl butynol, naphthyl butynol, 3-methyl-1-butyn-3-ol, 3-methyl-1-pentyn-3-ol, 1-hexyn-3-ol, 3-methyl-1-hexyn-3-ol, and the like. Especially preferred acetylenic alcohols according to the present invention are ethyl octynol and hexynol.

Various types of surfactants have been found to be effective and useful in assuring the complete dispersion of the active ingredients throughout the composition and a better contact of the inhibitor with the metallic surface and may optionally be additionally contained in the present inventive corrosion inhibitor. In general, any surfactant that is stable in aqueous acid may be used. Examples of useful surfactants are oxyethylated alkyl phenol, ammonium alkylbenzene-para-sulfonate, trimethyl stearylammonium chloride, alkyl sulfonate, alkyl taurate, alkyl phosphate, alkyl aryl sulfonate, ethoxylated oleate, ethoxylated sorbitol hexaoleate, ethoxylated polyol oleate and other ethoxylated oleates, tall oil and other fatty acids, ethylene oxide adducts of tridecyl phenol, nonyl phenol, and octyl phenol, of the type disclosed in U.S. Pat. No. 3,779,935, nonionic ethylene oxide adducts of a primary armine of the type disclosed in U.S. Pat. No. 4,038,368, and lauryl alcohol derivatives of ethylene oxide with about 2 to 23 moles of ethylene oxide, also more particularly described in U.S. Pat. No. 4,028,268.

Solvents, diluents and non-actylenic alcohols which may appropriately be used if desired include acid soluble organic solvents and water. Non-limiting examples include such diluents as diacetone alcohol, mesityl oxide, acetone, liquid members of the aliphatic alcohols, such as methanol, ethanol, propanol, isopropanol, butanol, pentanol, hexanol and the like, ethylene glycol, diethylene glycol, propylene glycol, dipropylene glycol, hexylene glycol, 1,5-pentanediol, and aromatic solvents.

The improved inhibitor compositions of this invention are prepared by blending the constituents in appropriate ratios in a vat or other vessel provided with a suitable agitator. The ratio of components in the corrosion inhibiting system can be varied, but the best results are obtained when formulated with a weight ratio of the CORYNOL product, consisting essentially of 2-methyl-3-butyne-2-ol, 2,5-dimethyl-3-hexyne-2,5-diol, to the additional acetylenic alcohol or alcohols between 1:10 and 10:1, preferably 1:5 and 5:1, and most ideally between 1:2 and 2:1. The weight ratio of combined acetylenic alcohols to the nitrogen

containing compound preferably the heterocyclic quaternary ammonium compound, can be formulated between 1:10 and 10:1, preferable between 1:5 and 5:1, but between 1:2 and 2:1 is most preferred.

If it is desired to incorporate a surfactant and/or a solvent in the present inhibitor compositions, the amounts of such constituents may be varied over a wide range. Desirable results are obtained when the amount of surfactant is present in an amount up to about 15% by weight, preferably between 1 and 5%. Similarly, the amount of solvents, if present, may range up to about 40% of the total composition preferably below 35% and generally in between about 15—35% by weight.

The inhibitor compositions of the invention formulated as described herein can be used in any of a variety of applications requiring the protection of metals against attack by corrosive acids, but are particularly useful for inhibiting the corrosion of oil well tubular goods and similar equipment by hydrochloric acid and other acid solutions used in workover and stimulation operations for high temperature oil and gas wells. The inhibitor compositions of the invention are normally incorporated in such acid solutions in concentrations ranging from about .05 to about 5%. The concentrations selected for a particular application will depend in part upon the particular acid solution then used, the susceptibility of the tubular good or other metal material to corrosion by the acid and the environment in which the acid is to be employed. Concentrations between about 0.5 and about 2% are generally preferred.

The following examples will serve to more comprehensively illustrate the principles of the invention but in being directed to certain specific compounds, process steps and conditions are not intended to limit the bounds of the invention. In all instances parts and percentages herein are by weight unless otherwise indicated.

Specific Inhibitor Compositions

The following specific compositions of this invention are prepared by blending the named constituents in the amounts given in a suitable vessel appropriately provided with a means to ensure adequate and uniform blending.

In composition 1 the nitrogen compound was benzyl quinolinium chloride. In compositions 2 and 3 the nitrogen compound was the benzyl chloride quaternary of the alkylpyridine Alkolidine 11 supplied by Lonza.

Inhibitor Composition 1:

Constituents:

| | |
|---|---|
| Nitrogen Compound | 30.8 grams |
| CORYNOL RPA | 50.0 grams |
| Hexynol | 5.0 grams |
| Water | 14.2 grams |
| Total | 100.0 grams |

Appearance — Clear

Inhibitor Composition 2:

Constituents:

| | |
|---|---|
| Nitrogen Compound | 25.0 grams |
| CORYNOL RPA | 50.0 grams |
| Hexynol | 15.0 grams |
| Diacetone alcohol | 15.0 grams |
| Total | 100.0 grams |

Appearance — Clear with some precipitation

Inhibitor Composition 3:

Constituents:

| | | |
|---|---|---|
| Nitrogen Compound | | 25.0 grams |
| CORYNOL RPA | | 37.5 grams |
| Hexynol | | 5.0 grams |
| Water | | 32.5 grams |
| | Total | 100.0 grams |

Appearance — Clear

Corrosion Inhibition Tests

In these tests, generally following the procedures in this field such as described in U.S. Patent No. 3,802,890, the acid solutions were mixed by diluting hydrochloric acid with water to the desired concentration. The acid solutions were prepared in advance in sufficient quantities to complete an entire series of tests with the same batch of acid. Corrosion coupons of 2.54 cm × 7.62 cm (1 inch × 3 inch) mild steel (M1018) were ordered in sufficient quantities to complete a series of tests on the same batch of coupons. The coupons were weighed to the nearest milligram.

Tests were conducted at 90.5°C (195°F), unless otherwise noted.

The acid solution was poured into an appropriate vessel in a sufficient quantity relative to the size of the test coupon. After the desired amount of acid was poured into the vessel, the inhibitor composition was added and stirred. The inhibited acid solution was then allowed to pre-heat to the desired test temperature. The coupons were then placed in the preheated inhibited acid solutions. The couponds were left in the acid solutions for the specified test time of 24 hours, then removed, cleaned, allowed to dry and then reweighed.

The loss in weight of the coupons was multiplied by a calculated factor to convert the loss in weight to $g/m^2/24\ h$ ($lbs./ft.^2/24$ hours). The factor was calculated as follows:

$$\frac{g.\dfrac{144 \cdot 6.45 \cdot cm^2}{0.093 \cdot m^2}\left(\dfrac{144\ in^2}{ft^2}\right)}{\dfrac{454\ g}{lb} \times \text{Surface Area of Coupon } 6.45 \cdot cm^2\ (in^2) \times \dfrac{1\ day}{24\ hr}} = \text{Factor}$$

The results of these tests are given below:

Corrosion Inhibition Tests

Test Conditions:

| | |
|---|---|
| Test Duration | 24 hours |
| Metal Coupon Type 2.54 cm × 7.62 cm | (1 inch × 3 inch) mild steel (M1018) |
| Corrodent Concentration | 15% w/w HCl |
| Inhibitor Concentration | 0.4% |

Test Results:

| Inhibitor Composition | Temp. | Corrosion Rate $g/m^2/day$ ($lb/ft^2/day$) | % Protection |
|---|---|---|---|
| 1 | 90.5°C (195°F) | 0.302 (0.00714) | 99.38 |
| 2 | 91.1°C (196°F) | 0.465 (0.01102) | 99.05 |
| 3 | 91.1°C (196°F) | 0.204 (0.00484) | 99.58 |
| 4 | 90.5°C (195°F) | 0.271 (0.00643) | 99.44 |
| 5 | 90.5°C (195°F) | 0.277 (0.00657) | 99.43 |
| 6 | 90.5°C (195°F) | 0.325 (0.0077) | 99.38 |

The results reported illustrate that the compositions of this invention effectively reduce metal corrosion in aqueous acidic environments.

While certain embodiments of the invention have been described for illustrative purposes, the invention is not limited thereto. Various other modifications or embodiments of the invention will be apparent to those skilled in the art in view of this disclosure. Such modifications or embodiments are within the spirit and scope of the disclosure, which is intended to be limited only by the scope of the appended claims.

**Claims**

1. In a corrosion inhibiting composition for use in aqueous acidic solutions comprising a nitrogen compound and an acetylenic alcohol in a corrosion inhibiting amount, the improvement wherein said acetylenic alcohol is a mixture of (α) 2-methyl-3-butyne-2-ol and (β) 2,5-dimethyl-3-hexyne-2,5-diol in which said 2-methyl-3-butyne-2-ol comprises from 25 to about 95% by weight of the mixture and said nitrogen compound is a quaternary ammonium compound selected from compounds according to the structural formulae:

(a) $[R_5—Z—R_6]^{q+}\ qX^-$

(b) $[R_5—P]^{q+}\ qX^-$

(c) $[R_8—\overset{R_7}{\underset{R_9}{N}}—CH_2—C{\equiv}C—CH_2—\overset{R_7}{N}—R_8]^{q+}\quad qX^-$

(d) $[(R_{10})_3—N—(CH_2)_3—N—(R_{10})_3]^{q+}\quad qX^-$

(e) $[R_{12}—CH_2CH_2—N—(R_{10})_3]^{q+}\quad qX^-$

(f) $[(R_{10})_4—N]^{q+}\quad qX^-$

wherein:

$R_5$ and $R_6$ are the same or different aromatic or non-aromatic heterocyclic tertiary amine,

$R_7$ and $R_8$ are the same or different lower alkyl,

$R_9$ is hydroxy substituted lower alkynyl,

$R_{10}$ substituents are chosen such that no more than one is a saturated or unsaturated fatty aliphatic radical of 7—24 carbon atoms and the other $R_{10}$ substituents are lower alkynyl of benzyl,

$R_{12}$ is a non-aromatic heterocyclic tertiary amine,

Z is $—CH_2—$, $—(CH_2)_2—$, $—CH_2—C{\equiv}C—CH_2—CH{=}CH—CH_2—$,

q is a number equal to the total number of quaternary nitrogen atoms in the cationic portion of the quaternary,

X is an anion selected from the group consisting of chlorine, bromine and iodine,

P is an alpha-alkenyl or alpha-alkynyl radical of 3—10 carbon atoms or benzyl and in which the weight ratio of said acetylenic alcohol mixture to said nitrogenous compound is in the range of 1:10 to 10:1, and whereby said composition contains optionally an acetylenic alcohol other than the alcohols (α) and (β) and in which the ratio by weight of the mxiture of (α) and (β) to said additional alcohol is between 1:10 to 10:1.

2. A composition as defined in claim 1 wherein said nitrogen containing compound is selected from the group consisting of:

(A) Quinoline-N-benzyl-ammonium chloride
(B) Bis(butyne-2-yl)-1,4-quinolinium dichloride
(C) Bis(butyne-2-yl)1,4-alkylpyridinium dichloride wherein said alkyl group contains 1—12 carbon atoms
(D) 1-benzyl-2,3-diphenyl-5-morpholinoethyl-pyrrolidine-N,N'-dibenzylammonium chloride
(E) Bis(butyne-2-yl)-1-diethylamine-4-oxy-2-heptyn-ammonium chloride
(F) 1-benzyl-2,3-diphenyl-5-dibenzylpiperazinomethylpyrrolidine-N,N'-dibenzyltriammonium chloride
(G) N-tallow-N-dipropargyl-N'-tripropargyl-propyladiammonium chloride
(H) 1-benzyl-2,3-diphenyl-5-benzyl-tallow-aminoethylpyrrolidine-N,N'-dibenzyldiammonium chloride
(I) N-dibenzyl-N-tribenzylethylpiperazinium dichloride
(J) N-tallow-N-dibenzyl-N'-tribenzylpropyldiammonium chloride
(K) Tri-propargylbenzylammonium chloride; and
(L) N,N,N-benzylpropargyltallow-N,N'-dipropargylbenzyl-propyldiammonium chloride.

3. A composition as defined in claims 1 and 2 in which the weight ratio of combined acetylenic alcohols (α), (β) and (γ) to nitrogen containing compound is in the range of 1:10 to 10:1.

4. A composition as defined in claims 1—3 in which the additional acetylenic alcohol is selected from compounds of the formula:

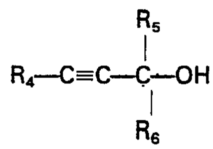

wherein $R_4$, $R_5$ and $R_6$ may be the same or different and are independently selected from the group consisting of hydrogen, alkyl, of up to 7 carbon atoms, phenyl, alkyl substituted phenyl, having up to 10 carbon atoms in the alkyl portion thereof, hydroxy-alkyl of up to 7 carbon atoms, or the alpha-R's may be joined together to form a 5 or 6 membered alicyclic ring.

5. A metal corrosion inhibiting composition according to claims 1—4, in which the additional acetylenic alcohol is selected from hexynol, dimethyl hexynol, dimethyl hexynediol, dimethyl octynediol, methyl butynol, methyl pentynol, ethynyl cyclohexanol, phenyl butynol, ditertiary acetylenic glycol, ethyl octynol, 3,4-dihydroxy-1-butyne, 1-ethynylcyclohexanol, 2-methyl-3-butyn-2-ol, 1-propyn-3-ol, 1-butyn-3-ol, 1-pentyn-3-ol, 1-heptyn-3-ol, 1-octyn-3-ol, 1-nonyn-3-ol, 1-decyn-3-ol, 3-(2,4,5-trimethyl-3-cyclohexenyl)-1-propyne-3-ol, propargyl alcohol, 1,4-butynediol, 3-methyl-1-nonyn-3-ol, alpha-ethynyl-2,4,6-trimethylbenzyl alcohol, 2-methyl-1-pentyn-3-ol, alpha-ethynyl-benzyl alcohol, 1-(2,4,6-trimethyl-3-cyclohexenyl)-3-propyn-1-ol, benzyl butynol, naphthyl butynol, 3-methyl-1-butyn-3-ol, 3-methyl-1-pentyn-3-ol, 1-hexyn-3-ol, 3-methyl-1-hexyn-3-ol.

6. A corrosion inhibiting composition according to claim 5, in which the additional acetylenic alcohols are ethyl octynol or hexynol.

7. A composition as defined in claim 1 wherein the said nitrogen containing compound is benzylquinolinium chloride.

8. A composition as defined in claim 1 wherein said nitrogen containing compound is a benzyl chloride quaternary of an alkyl pyridine in which the alkyl group contains from 1—12 carbon atoms.

9. A corrosion inhibiting composition according to claim 1, in which the acetylenic alcohol mixture of (α) and (β) consists essentially of:

| | |
|---|---|
| 2-methyl-3-butyne-2-ol | 12—19% w/w |
| 2,5-dimethyl-3-hexyne-2,5-diol | 30—34% w/w |
| acetic acid | 2— 4% w/w |
| potassium acetate | 3— 5% w/w |
| water | 19—24% w/w |

and the balance is composed of acetone aldolization product.

10. A corrosion inhibiting composition according to claim 9, in which from 4 to 8 parts of methyl butynol are added per part of said mixture of (α) and (β).

11. A corrosion inhibiting composition according to claim 1, consisting essentially of:

(a) benzyl quinolinium chloride

(b) an acetylenic alcohol mixture of (α) and (β) consisting essentially of:

| | |
|---|---|
| 2-methyl-3-butyne-2-ol | 12—19% w/w |
| 2,5-dimethyl-3-hexyne-2,5-diol | 30—34% w/w |
| acetic acid | 2— 4% w/w |
| potassium acetate | 3— 5% w/w |
| water | 19—24% w/w |

and the balance composed of acetone aldolization products,

(c) hexynol, and

(d) water.

12. A metal corrosion inhibiting composition according to claim 1, consisting essentially of:

(a) the benzyl chloride quaternary of an alkyl pyridine in which the alkyl groups contain from 1—12 carbon atoms,

(b) an acetylenic alcohol mixture of (α) and (β) consisting essentially of:

| | |
|---|---|
| 2-methyl-3-butyne-2-ol | 12—19% w/w |
| 2,5-dimethyl-3-hexyne-2,5-diol | 30—34% w/w |
| acetic acid | 2— 4% w/w |
| potassium acetate | 3— 5% w/w |
| water | 19—24% w/w |

and the balance composed of acetone aldolization products,

(c) hexynol, and

(d) diacetone alcohol.

13. A corrosion inhibiting composition according to claim 1, consisting essentially of:

(a) the benzyl chloride quaternary of an alkyl pyridine in which the alkyl groups contain from 1—12 carbon atoms,

(b) an acetylenic alcohol mixture of (α) and (β) consisting essentially of:

| | |
|---|---|
| 2-methyl-3-butyne-2-ol | 12—19% w/w |
| 2,5-dimethyl-3-hexyne-2,5-diol | 30—34% w/w |
| acetic acid | 2— 4% w/w |
| potassium acetate | 3— 5% w/w |
| water | 19—24% w/w |

and the balance composed of acetone aldolization products,

(c) hexynol, and

(d) soft water.

14. A method of inhibiting the corrosivity of an aqueous acidic solution containing corrosive acids in contact with metal by incorporating into said corrosive acid a corrosion inhibiting amount of a composition according to claim 1.

**Patentansprüche**

1. Bei einer korrosionshemmenden Zusammensetzung zur Verwendung in wäßrigen sauren Lösungen, umfassend eine Stickstoff-Verbindung und einen acetylenischen Alkohol in einer korrosionshemmenden Menge, die Verbesserung, worin der acetylenische Alkohol eine Mischung aus

(α) 2-Methyl-3-butin-2-ol und

(β) 2,5-Dimethyl-3-hexin-2,5-diol

ist, in der das 2-Methyl-3-butin-2-ol etwa 25 bis etwa 95% Gew.-% der Mischung ausmacht und die

Stickstoff-Verbindung eine quaternäre Ammonium-Verbindung ist, die aus Verbindungen der Strukturformeln:

(a) $[R_5—Z—R_6]^{q+}$ $qX^-$

(b) $[R_5—P]^{q+}$ $qX^-$

(c) 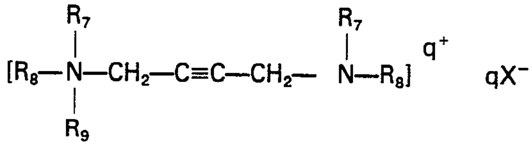

(d) $[(R_{10})_3—N—(CH_2)_3—N—(R_{10})_3]^{q+}$ $qX^-$

(e) $[R_{12}—CH_2CH_2—N—(R_{10})_3]^{q+}$ $qX^-$

(f) $[(R_{10})_4—N]^{q+}$ $qX^-$

ausgewählt ist, worin:

$R_5$ und $R_6$ gleich oder verschieden und aromatische oder nicht-aromatische heterocyclische tertiäre Amine sind,

$R_7$ und $R_8$ gleich oder verschieden und Niederalkyl sind,

$R_9$ durch Hydroxy substituiertes Niederalkinyl ist,

die $R_{10}$-Substituenten so gewählt sind, daß nicht mehr als einer ein gesättigter oder ungesättigter fettaliphatischer Rest mit 7 bis 24 Kohlenstoff-Atomen ist und die anderen Substituenten $R_{10}$ Niederalkinyl von Benzyl sind,

$R_{12}$ ein nicht-aromatisches heterocyclisches tertiäres Amin ist,

Z $—CH_2—$, $—(CH_2)_2—$, $—CH_2—C{\equiv}C—CH_2—CH{=}CH—CH_2—$ ist,

q eine Zahl ist, die gleich der Gesamtzahl der quaternären Stickstoff-Atome in dem kationischen Teil der quaternären Verbindung ist,

X ein Anion ist, das aus der aus Chlor, Brom und Iod bestehenden Gruppe ausgewählt ist,

P ein α-Alkenyl oder α-Alkinyl-Rest mit 3 bis 10 Kohlenstoff-Atomen oder Benzyl ist, und

worin das Gewichts-Verhältnis des acetylenischen Alkohols zu der stickstoffhaltigen Verbindung im Bereich von 1:10 bis 10:1 liegt und wobei die Zusammensetzung gegebenenfalls einen anderen acetylenischen Alkohol als die Alkohole (α) und (β) enthält und worin das Gewichts-Verhältnis der Mischung aus (α) und (β) zu dem zusätzlichen Alkohol zwischen 1:10 und 10:1 liegt.

2. Zusammensetzung nach Anspruch 1, worin die Stickstoff enthaltende Verbindung aus der aus

(A) Chinolin-N-benzylammoniumchlorid,

(B) Bis(butin-2-yl)-1,4-chinoliniumdichlorid,

(C) Bis(butin-2-yl)-1,4-alkylpyridiniumdichlorid, worin die Alkyl-Gruppe 1 bis 12 Kohlenstoff-Atome enthält,

(D) 1-Benzyl-2,3-diphenyl-5-morpholinoethylpyrrolidin-N,N'-dibenzylammoniumchlorid,

(E) Bis(butin-2-yl)-1-diethylamino-4-oxy-2-heptinammonium chlorid,

(F) 1-Benzyl-2,3-diphenyl-5-dibenzylpiperazinomethylpyrrolidin-N,N'-dibenzyltriammoniumchlorid,

(G) N-Talg-N-dipropargyl-N'-tripropargyl-propyladiammoniumchlorid,

(H) 1-Benzyl-2,3-diphenyl-5-benzyl-talg-aminoethylpyrrolidin-N,N'-dibenzyldiammoniumchlorid,

(I) N-Dibenzyl-N-tribenzylethylpiperaziniumdichlorid,

(J) N-Talg-N-dibenzyl-N'-tribenzylpropyldiammoniumchlorid,

(K) Tri-propargylbenzylammoniumchlorid und

(L) N,N,N-Benzylpropargyltalg-N,N'-dipropargylbenzylpropyldiammoniumchloride

bestehenden Gruppe ausgewählt ist.

3. Zusammensetzung nach den Anspruchen 1 und 2, worin das Gewichts-Verhältnis der vereinigten acetylenischen Alkohole (α), (β) und (γ) zu der Stickstoff enthaltenden Verbindung im Bereich von 1:10 bis 10:1 liegt.

4. Zusammensetzung nach den Anspruchen 1 bis 3, worin der zusätzliche acetylenische Alkohol aus Verbindungen der Formel

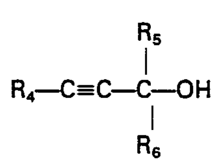

ausgewählt ist, in der $R_4$, $R_5$ und $R_6$ gleich oder verschieden sein können und unabhängig voneinander aus der aus Wasserstoff, Alkyl mit bis zu 7 Kohlenstoff-Atomen, Phenyl, alkylsubstituiertem Phenyl mit bis zu 10

Kohlenstoff-Atomen in dessen Alkyl-Teil, Hydroxyalkyl mit bis zu 7 Kohlenstoff-Atomen bestehenden Gruppe ausgewählt sind, oder die α-R-Reste unter Bildung eines 5- oder 6-gliedrigen alicyclischen Ringes miteinander verbunden sein können.

5. Zusammensetzung zur Hemmung der Metall-Korrosion nach den Ansprüchen 1 bis 4, worin der zusätzliche acetylenische Alkohol aus Hexinol, Dimethylhexinol, Dimethylhexindiol, Dimethyloctindiol, Methylbutinol, Methylpentinol, Ethinylcyclohexanol, Phenylbutinol, di-tert-Acetylenglycol, Ethyloctinol, 3,4-Dihydroxy-1-butin, 1-Ethinylcyclohexanol, 2-Methyl-3-butin-2-ol, 1-Propin-3-ol, 1-Butin-3-ol, 1-Pentin-3-ol, 1-Heptin-3-ol, 1-Octin-3-ol, 1-Nonin-3-ol, 1-Decin-3-ol, 3-(2,4,5-Trimethyl-3-cyclohexenyl)-1-propin-3-ol, Propargylalkohol, 1,4-Butindiol, 3-Methyl-1-nonyl-3-ol, α-Ethinyl-2,4,6-trimethylbenzylalcohol, 2-Methyl-1-pentin-3-ol, α-Ethinylbenzylalkohol, 1-(2,4,6-Trimethyl-3-cyclohexenyl)-3-propin-1-ol, Benzylbutinol, Naphthylbutine, 3-Methyl-1-butin-3-ol, 3-Methyl-1-pentin-3-ol, 1-Hexin-3-ol, 3-Methyl-1-hexin-3-ol ausgewählt ist.

6. Korrosionshemmende Zusammentsetzung nach Anspruch 5, worin die zusätzlichen acetylenischen Alkohole Ethyloctinol oder Hexinol sind.

7. Zusammensetzung nach Anspruch 1, worin die Stickstoff enthaltende Verbindung Benzylchinoliniumchlorid ist.

8. Zusammensetzung nach Anspruch 1, worin die Stickstoff enthaltende Verbindung ein quaternäres Salz aus Benzylchlorid und einem Alkylpyridin ist, worin die Alkyl-Gruppe 1 bis 12 Kohlenstoff-Atome enthält.

9. Korrosionshemmende Zusammentsetzung nach Anspruch 1, worin die Mischung aus den acetylenischen Alkoholen (α) und (β) im wesentlichen aus:

| | |
|---|---|
| 2-Methyl-3-butin-2-ol | 12—19 Gew./Gew.-%, |
| 2,5-Dimethyl-3-hexin-2,5-diol | 30—34 Gew./Gew.-%, |
| Essigsäure | 2— 4 Gew./Gew.-%, |
| Kaliumacetat | 3— 5 Gew./Gew.-%, |
| Wasser | 19—24 Gew./Gew.-%, |

besteht und der Rest aus dem Produkt der Aldolisierung von Aceton aufgebaut ist.

10. Korrosionshemmende Zusammensetzung nach Anspruch 9, worin 4 bis 8 Teile Methylbutinol auf 1 Teil der genannten Mischung aus (α) und (β) zugesetzt werden.

11. Korrosionshemmende Zusammensetzung nach Anspruch 1, bestehend im wesentlichen aus

(a) Benzylchinoliniumchlorid,

(b) einer Mischung aus den acetylenischen Alkoholen (α) und (β), im wesentlichen bestehend aus

| | |
|---|---|
| 2-Methyl-3-butin-2-ol | 12—19 Gew./Gew.-%, |
| 2,5-Dimethyl-3-hexin-2,5-diol | 30—34 Gew./Gew.-%, |
| Essigsäure | 2— 4 Gew./Gew.-%, |
| Kaliumacetat | 3— 5 Gew./Gew.-%, |
| Wasser | 10—24 Gew./Gew.-%, |

wobei der Rest aus Produkten der Aldolisierung von Aceton aufgebaut ist,

(c) Hexinol und

(d) Wasser.

12. Zusammensetzung zur Hemmung der Metall-Korrosion nach Anspruch 1, bestehend im wesentlichen aus

(a) einem quaternären Salz aus Benzylchlorid und einem Alkylpyridin, worin die Alkyl-Gruppe 1 bis 12 Kohlenstoff-Atome enthält,

(b) einer Mischung aus den acetylenischen Alkoholen (α) und (β), im wesentlichen bestehend aus

| | |
|---|---|
| 2-Methyl-3-butin-2-ol | 12—19 Gew./Gew.-%, |
| 2,5-Dimethyl-3-hexin-2,5-diol | 30—34 Gew./Gew.-%, |
| Essigsäure | 2— 4 Gew./Gew.-%, |
| Kaliumacetat | 3— 5 Gew./Gew.-%, |
| Wasser | 19—24 Gew./Gew.-%, |

wobei der Rest aus Produkten der Aldolisierung von Aceton aufgebaut ist,

(c) Hexinol und

(d) Diacetonalkohol.

13. Korrosionshemmende Zusammensetzung nach Anspruch 1, bestehend im wesentlichen aus:

(a) einem quaternären Salz aus Benzylchlorid und einem Alkylpyridin, worin die Alkyl-Gruppe 1 bis 12 Kohlenstoff-Atome enthält,

(b) einer Mischung aus den acetylenischen Alkoholen (α) und (β), im wesentlichen bestehend aus

| | |
|---|---|
| 2-Methyl-3-butin-2-ol | 12—19 Gew./Gew.-%, |
| 2,5-Dimethyl-3-hexin-2,5-diol | 30—34 Gew./Gew.-%, |
| Essigsäure | 2— 4 Gew./Gew.-%, |
| Kaliumacetat | 3— 5 Gew./Gew.-%, |
| Wasser | 19—24 Gew./Gew.-%, |

wobei der Rest aus Produkten der Aldolisierung von Aceton aufgebaut ist,

(c) Hexinol und

(d) weichem Wasser.

14. Verfahren zur Hemmung des Korrosionsvermögens einer wäßrigen sauren Lösung, die korrodierende Säuren enthält, beim Kontakt mit Metall durch Einarbeiten einer korrosionshemmenden Menge einer Zusammensetzung nach Anspruch 1 in die genannte korrodierende Säure.

**Revendications**

1. Dans une composition inhibant la corrosion pour l'emploi dans les solutions aqueuses acides comprenant un composé azoté et un alcool acétylénique en une quantité inhibant la corrosion, le perfectionnement selon lequel ledit alcool acétylénique est un mélange de (α) le 2-méthyl-3-butyne-2-ol et (β) le 2,5-diméthyl-3-hexyne-2,5-diol, dans lequel ledit 2-méthyl-3-butyne-2-ol constitue 25 à environ 95% du poids du mélange et ledit composé azoté est un composé ammonium quaternaire choisi parmi les composés répondant aux formules développées suivantes:

(a) $[R_5—Z—R_6]^{q+}\ qX^-$

(b) $[R_5—P]^{q+}\ qX^-$

(c) $[R_8—\underset{R_9}{\overset{R_7}{N}}—CH_2—C{\equiv}C—CH_2—\overset{R_7}{N}—R_8]^{q+}\quad qX^-$

(d) $[(R_{10})_3—N—(CH_2)_3—N—(R_{10})_3]^{q+}\quad qX^-$

(e) $[R_{12}—CH_2CH_2—N—(R_{10})_3]^{q+}\quad qX^-$

(f) $[(R_{10})_4—N]^{q+}\quad qX^-$

où:

$R_5$ et $R_6$, qui sont semblables ou différents, représentant une amine tertiaire hétérocyclique aromatique ou non aromatique,

$R_7$ et $R_8$, qui sont semblables ou différents, représentant un alcoyle inférieur,

$R_9$ est un alcynyle inférieur hydroxy substitué,

les substituants $R_{10}$ sont choisis de façon à ce que pas plus d'un soit un radical aliphatique saturé ou insaturé de 7 à 24 atomes de carbone et les autres substituants $R_{10}$ soient un alcynyle inférieur ou un benzyle,

$R_{12}$ est une amine tertiaire hétérocyclique non aromatique,

Z est $—CH_2—$, $—(CH_2)_2—$, $—CH_2—C{\equiv}C—CH_2—CH{=}CH—CH_2—$,

q est un nombre égal au nombre total des atomes d'azote quaternaire dans la portion cationique du quaternaire,

X est un anion choisi dans le groupe constitué par le chlore, le brome et l'iode,

P est un radical α-alcényle ou α-alcynyle de 3 à 10 atomes de carbone ou un benzyle,

et dans lequel le rapport pondéral dudit mélange d'alcools acétyléniques audit composé azoté est dans la gamme de 1/10 à 10/1 et ladite composition contient facultativement un alcool acétylénique autre que les alcools (α) et (β) et le rapport pondéral du mélange de (α) et (β) audit alcool additionnel est entre 1/10 et 10/1.

2. Une composition selon la revendication 1, dans laquelle ledit composé azoté est choisi dans le groupe constitué de:

(A) le chlorure de quinoléine-N-benzyl-ammonium

(B) le dichlorure de bis(butyne-2-yl)-1,4-quinolinium

(C) un dichlorure de bis(butyne-2-yl)-1,4-alcoylpyridinium dans lequel ledit groupe alcoyle contient 1 à 12 atomes de carbone

(D) le chlorure de 1-benzyl-2,3-diphényl-5-morpholinoéthyl-pyrrolidine-N,N'-dibenzylammonium

(E) le chlorure de bis(butyne-2-yl)-1-diéthylamino-4-oxy-2-heptyn-ammonium

(F) le chlorure de 1-benzyl-2,3-diphényl-5-dibenzylpipérazinométhylpyrrolidine-N,N'-dibenzyltriammonium

(G) le chlorure de N-suif-N-dipropargyl-N'-tripropargyl-propyladiammonium

(H) le chlorure de 1-benzyl-2,3-diphényl-5-benzylsuifaminoéthylpyrrolidine-N,N'-dibenzyldiammonium

(I) le dichlorure de N-dibenzyl-N-tribenzyléthylpipérazinium

(J) le chlorure de N-suif-N-dibenzyl-N'-tribenzylpropyldiammonium

(K) le chlorure de Tri-propargylbenzylammonium; et

(L) le chlorure de N,N,N-benzylpropargylsuif-N,N'-dipropargylbenzylpropyldiammonium.

3. Une composition selon les revendications 1 et 2 dans laquelle le rapport pondéral des alcools acétyleniques (α), (β) et (γ) combinés au composé azoté est dans la gamme d'environ 1/10 à 10/1.

4. Une composition selon les revendications 1 à 3, dans laquelle l'alcool acétylénique additionnel est choisi parmi les composés de formule:

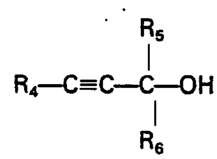

dans laquelle $R_4$, $R_5$ et $R_6$ peuvent être semblables ou différents et sont indépendamment choisi dans le groupe constitué par un hydrogène, un alcoyle ayant jusqu'à 7 atomes de carbone, un phényle, un phényle alcoyl-substitué ayant jusqu'à 10 atomes de carbone dans la portion alcoyle, un hydroxyalcoyle ayant jusqu'a à 7 attomes de carbone ou les α-R peuvent être unis ensemble pour former un cycle alicyclique à 5 ou 6 chaînons.

5. Une composition inhibant la corrosion des métaux selon les revendications 1 à 4, dans laquelle l'alcool acétylenique additionnel est choisi parmi l'hexynol, le diméthylhexynol, le diméthylhexynediol, le diméthyloctynediol, le méthylbutynol, le méthylpentynol, le éthynylcyclohexanol, le phénylbutynol, le glycol acétylenique ditertiare, l'éthyloctynol, le 3,4-dihydroxy-1-butyne, le 1-éthynylcyclohexanol, le 2-méthyl-3-butyne-2-ol, le 1-propyne-3-ol, le 1-butyne-3-ol, le 1-pentyne-3-ol, le 1-heptyne-3-ol, le 1-octyne-3-ol, le 1-nonyle-3-ol, le 1-décyne-3-ol, le 3-(2,4,5-triméthyl-3-cyclohexényl)-1-propyne-3-ol, l'alcool propargylique, le 1,4-butynediol, le 3-méthyl-1-nonyne-3-ol, l'alcool α-éthynyl-2,4,6-triméthylbenzylique, le 2-méthyl-1-pentyne-3-ol, l'alcool α-éthynylbenzylique, le 1-(2,4,6-triméthyl-3-cyclohexényl)-3-propyne-1-ol, le benzylbutynol, le naphtylbutynol, le 3-méthyl-1-butyne-3-ol, 3-méthyl-1-pentyne-3-ol, le 1-hexyne-3-ol, et le 3-méthyl-1-hexyne-3-ol.

6. Une composition inhibant la corrosion selon la revendication 5, dans laquelle les alcools acétyléniques additionnels sont l'éthyloctynol ou l'hexynol.

7. Une composition selon la revendication 1, dans laquelle ledit composé azoté est le chlorure de benzylquinolinium.

8. Une composition selon la revendication 1, dans laquelle ledit composé azoté est un chlorure de benzyle quaternaire d'une alcoylpyridine dont le groupe alcoyle contient 1 à 12 atomes de carbone.

9. Une composition inhibant la corrosion selon la revendication 1, dans laquelle le mélange d'alcools acétyléniques (α) et (β) est constitué essentiellement de:

| | |
|---|---|
| 2-méthyl-3-butyne-2-ol | 12—19% p/p |
| 2,5-diméthyl-3-hexyne-2,5-diol | 30—34% p/p |
| acide acétique | 2— 4% p/p |
| acétate de potassium | 3— 5% p/p |
| eau | 19—24% p/p |

et le complément est composé d'un produit d'aldolisation de l'acétone.

10. Une corrosion inhibant la corrosion selon la revendication 9, dans laquelle de 4 à 8 parties de méthylbutynol sont ajoutées par partie dudit mélange d'(α) et de (β).

11. Une composition inhibant la corrosion selon la revendication 1, constituée essentiellement de:

(a) du chlorure de benzylquinolinium

(b) un mélange d'alcools acétyléniques (α) et (β) constitué essentiellement de:

| | |
|---|---|
| 2-méthyl-3-butyne-2-ol | 12—19% p/p |
| 2,5-diméthyl-3-hexyne-2,5-diol | 30—34% p/p |
| acide acétique | 2— 4% p/p |
| acétate de potassium | 3— 5% p/p |
| eau | 19—24% p/p |

et le complément est composé de produits d'aldolisation de de l'acétone,

(c) de l'hexynol, et

(d) de l'eau.

12. Une composition inhibant la corrosion des métaux selon la revendication 1, constituée essentiellement de:

(a) le chlorure de benzyle quaternaire d'une alcoylpyridine dont les groupes alcoyles contiennent de 1 à 12 atomes de carbone,

(b) un mélange d'alcools acétyléniques (α) et (β) constitué essentiellement de:

| | |
|---|---|
| 2-méthyl-3-butyne-2-ol | 12—19% p/p |
| 2,5-diméthyl-3-hexyne-2,5-diol | 30—34% p/p |
| acide acétique | 2— 4% p/p |
| acétate de potassium | 3— 5% p/p |
| eau | 19—24% p/p |

et le complément est composé de produits d'aldolisation de l'acétone,

(c) de l'hexynol, et

(d) du diacétone-alcool.

13. Une composition inhibant la corrosion selon la revendication 1, constituée essentiellement de:

(a) le chlorure de benzyle quaternaire d'une alcoylpyridine dont les groupes alcoyles contiennent 1 à 12 atome de carbone,

(b) un mélange d'alcools acétyléniques (α) et (β) constitué essentiellement de:

| | |
|---|---|
| 2-méthyl-3-butyne-2-ol | 12—19% p/p |
| 2,5-diméthyl-3-hexyne-2,5-diol | 30—34% p/p |
| acide acétique | 2— 4% p/p |
| acétate de potassium | 3— 5% p/p |
| eau | 19—24% p/p |

et le complément est composé de produits d'aldolisation de l'acétone,

(c) de l'hexynol, et

(d) de l'eau douce.

14. Un procédé pour inhiber la corrosivité d'une solution aqueuse acide, contenant des acides corrosifs en contact avec un métal, par incorporation audit acide corrosif d'une quantité inhibant la corrosion d'une composition selon la revendication 1.